(19) Europäisches Patentamt
European Patent Office
Office européen des brevets

(11) **EP 4 779 719 A1**

(12) **EUROPEAN PATENT APPLICATION**
published in accordance with Art. 153(4) EPC

(43) Date of publication:
**22.07.2026 Bulletin 2026/30**

(21) Application number: **24943688.2**

(22) Date of filing: **26.12.2024**

(51) International Patent Classification (IPC):
*H01M 4/58* (2010.01)

(52) Cooperative Patent Classification (CPC):
Y02E 60/10

(86) International application number:
**PCT/CN2024/142852**

(87) International publication number:
**WO 2026/113097 (04.06.2026 Gazette 2026/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.11.2024  CN 202411752476**

(71) Applicant: **Beijing Easpring Material Technology
Co., Ltd.
Beijing 100160 (CN)**

(72) Inventors:
• **HOU, Xiaofeng
  Beijing 100160 (CN)**

• **HU, Yingli
  Beijing 100160 (CN)**
• **FU, Haikuan
  Beijing 100160 (CN)**
• **ZHANG, Xuequan
  Beijing 100160 (CN)**
• **LIU, Yafei
  Beijing 100160 (CN)**
• **CHEN, Yanbin
  Beijing 100160 (CN)**

(74) Representative: **Nederlandsch Octrooibureau
P.O. Box 29720
2502 LS The Hague (NL)**

(54) **POSITIVE ELECTRODE ACTIVE MATERIAL AND PREPARATION METHOD THEREFOR,
POSITIVE ELECTRODE SHEET, BATTERY, AND ELECTRIC DEVICE**

(57)    The present application relates to the technical field of secondary batteries, and particularly, to a cathode active material, a preparation method therefor, a cathode plate, a battery, and an electrical device. The cathode active material includes lithium iron phosphate. The lithium iron phosphate is secondary particles formed by agglomeration of primary particles. A number-based particle size distribution curve of the primary particles has three characteristic peaks: a first characteristic peak, a second characteristic peak, and a third characteristic peak. The first characteristic peak is the highest characteristic peak. A peak position $D_1$ of the first characteristic peak is in a range of 100 nm to 300 nm, and a number percentage $N_1$ corresponding to the peak position $D_1$ of the first characteristic peak ranges from 25% to 35%. A peak position $D_2$ of the second characteristic peak of the primary particles is in a range of 320 nm to 400 nm, and a number percentage $N_2$ corresponding to the peak position $D_2$ of the second characteristic peak ranges from 4% to 9%. A peak position $D_3$ of the third characteristic peak of the primary particles is in a range of 450 nm to 620 nm, and a number percentage $N_3$ corresponding to the peak position $D_3$ of the third characteristic peak ranges from 0.5% to 2%. These indicate that the cathode active material contains particles with various particle size distributions, which operate together to form a gradual blending. This structure endows the cathode active material with a high compaction density, and a secondary battery containing the material has a high capacity and excellent low-temperature performance.

EP 4 779 719 A1

FIG. 3

**Description**

**PRIORITY INFORMATION**

The present application claims priority and benefits to Chinese Patent Application No. 202411752476.0, filed on November 30, 2024, the entire disclosure of which is incorporated herein by reference.

**FIELD**

The present disclosure relates to the technical field of secondary batteries, and in particular, to a cathode active material, a preparation method therefor, a cathode plate, a battery, and an electrical device.

**BACKGROUND**

Lithium iron phosphate materials have become the most widely used cathode materials in lithium-ion batteries due to their advantages of stable structure, good safety, and long cycling life. With the development of society and technology, higher requirements have been put forward for energy storage devices including the lithium-ion batteries, but the poor low-temperature performance thereof has always been a bottleneck restricting their applications in certain low-temperature environments. Therefore, it has become a research focus in the field in recent years to improve an energy density and low-temperature performance of lithium iron phosphate batteries. Gradation of large and small particles is an effective method to improve a compaction density of powder. Currently, there is a known solution for preparing a lithium iron phosphate cathode material with a high compaction density by dry mixing and grading lithium iron phosphate materials with different particle sizes. However, such a solution requires additional preparation of lithium iron phosphate precursors with different particle sizes. Moreover, the materials are required to be dry-mixed, which cannot ensure mixing uniformity and leads to a significant increase in cost. In fact, with such a solution, it still cannot obtain a lithium iron phosphate cathode material with high performance and excellent low-temperature performance.

**SUMMARY**

The present disclosure aims to solve at least one of the technical problems in the related art to some extent. To this end, an objective of the present disclosure is to provide a cathode active material, a preparation method therefor, a cathode plate, a battery, and an electrical device. The cathode active material yields a well-graded structure, carries a highly uniform carbon coating, and maintains high electronic conductivity and ion diffusion capacity at low temperatures, thereby combining a high compaction density and excellent low-temperature performance. Meanwhile, the preparation of the cathode active material is simple and suitable for large-scale industrial production and application.

To this end, in a first aspect, the present disclosure provides a cathode active material. The cathode active material includes lithium iron phosphate. The lithium iron phosphate is secondary particles formed by agglomeration of primary particles. A number-based particle size distribution curve of the primary particles has three characteristic peaks: a first characteristic peak, a second characteristic peak, and a third characteristic peak. The first characteristic peak is the highest characteristic peak. A peak position $D_1$ of the first characteristic peak is in a range of 100 nm to 300 nm, and a number percentage $N_1$ corresponding to the peak position $D_1$ of the first characteristic peak ranges from 25% to 35%. A peak position $D_2$ of the second characteristic peak of the primary particles is in a range of 320 nm to 400 nm, and a number percentage $N_2$ corresponding to the peak position $D_2$ of the second characteristic peak ranges from 4% to 9%. A peak position $D_3$ of the third characteristic peak of the primary particles is in a range of 450 nm to 620 nm, and a number percentage $N_3$ corresponding to the peak position $D_3$ of the third characteristic peak ranges from 0.5% to 2%.

The cathode active material provided in the present disclosure is of multi-level blending. Meanwhile, the number-based particle size distribution curve of the primary particles exhibits three characteristic peaks. Correspondingly, the primary particles in the cathode active material are of grading of large and small particles, indicating that the cathode active material contains nano-sized single-crystal particles, which can progressively fill voids among large particles, leading to a high compaction density. Meanwhile, the adopted co-doping modification with multiple metal elements is beneficial for formation of vacancies and valence variations within a crystal structure of the cathode active material, widens ion diffusion channels, and promotes mobility of lithium ions and mobility of electrons in the material, thereby improving the electrical conductivity and the ion diffusion capacity at low temperatures. Thus, a secondary battery containing the cathode active material has better low-temperature performance.

According to an embodiment of the present disclosure, the number-based particle size distribution curve of the primary particles exhibits a first minimum value $D_{12}$ between the first characteristic peak and the second characteristic peak. A particle size corresponding to the first minimum value $D_{12}$ ranges from 270 nm to 320 nm, and a number percentage $N_{12}$ corresponding to the first minimum value $D_{12}$ ranges from 3% to 6%.

According to an embodiment of the present disclosure, a peak separation index $\gamma$ of the cathode active material ranges from 5% to 40%, in which $\gamma=(N_2-N_{12})/N_2\times100\%$, where: $N_{12}$ is a number percentage corresponding to the first minimum value $D_{12}$ between the first characteristic peak and the second characteristic peak; and $N_2$ is a number percentage corresponding to the peak position $D_2$ of the second characteristic peak.

According to an embodiment of the present disclosure, the number-based particle size distribution curve of the primary particles exhibits a second minimum value $D_{23}$ between the second characteristic peak and the third characteristic peak. A particle size corresponding to the second minimum value $D_{23}$ ranges from 400 nm to 500 nm, and a number percentage $N_{23}$ corresponding to the second minimum value $D_{23}$ ranges from 0.0% to 0.5%.

According to an embodiment of the present disclosure, $D_{50}$ of the primary particles ranges from 0.1 $\mu$m to 1.0 $\mu$m.

According to an embodiment of the present disclosure, $D_{50}$ of the secondary particles ranges from 0.7 $\mu$m to 2.0 $\mu$m.

According to an embodiment of the present disclosure, a compaction density of the cathode active material ranges from 2.45 $g/cm^3$ to 2.65 $g/cm^3$.

According to an embodiment of the present disclosure, a specific surface area of the cathode active material ranges from 10 $m^2/g$ to 13 $m^2/g$.

According to an embodiment of the present disclosure, the cathode active material includes a matrix and a carbon coating layer coated on a surface of the matrix. The matrix has a composition represented by formula I: $Li_{1+a}Fe_bM_c(PO_4)_d$ Formula I, in which: $-0.1\leq a\leq0.1$, $0\leq b\leq1$, $0\leq c\leq0.5$, $0\leq d\leq1$; M is selected from at least one of La, Ce, Cr, Mo, Ca, Hf, Ti, Fe, Zn, Y, Zr, W, Nb, Sm, Sb, Co, Ni, V, Mg, Na, B, or Al;

According to an embodiment of the present disclosure, M includes Nb and at least one of Al, Nb, W, Co, V, or Ti.

According to an embodiment of the present disclosure, based on a total weight of the cathode active material, a content of the carbon coating layer ranges from 0.5 wt% to 2 wt%, and preferably from 1 wt% to 1.5 wt%.

In a second aspect, the present disclosure provides a preparation method for the cathode active material according to the first aspect. The preparation method includes: preparing a first mixed solution containing first iron phosphate, a first lithium source, a first carbon source, and a first M source, grinding the first mixed solution to obtain a first slurry, and performing a first spray drying treatment on the first slurry to obtain a first precursor; preparing a second mixed solution containing second iron phosphate, a second lithium source, a second carbon source, and a second M source, grinding the second mixed solution to obtain a second slurry, and performing a second spray drying treatment on the second slurry to obtain a second precursor; and mixing the first precursor and the second precursor and sintering the mixture to obtain the cathode active material. $D_{50}$ of the first slurry is smaller than $D_{50}$ of the second slurry.

According to the present disclosure, precursors with different particle sizes are obtained by preparing slurry with different particle sizes and are blended, to mix and grade of large and small particles at a precursor stage. Through subsequent sintering and crystallization, the particle size evolves with horizontal growth of the primary particles, which significantly optimizes the particle grading of the material and enables the particles to be bonded tighter. Thus, a cathode active material with both a high capacity and a high compaction density is prepared. Meanwhile, the preparation method has a simple process flow and low device requirements, and thus it is suitable for application in large-scale industrial production.

According to an embodiment of the present disclosure, a difference between the $D_{50}$ of the first slurry and the $D_{50}$ of the second slurry is greater than 0.2 $\mu$m.

According to an embodiment of the present disclosure, a particle size of the first iron phosphate ranges from 80 nm to 200 nm, and a particle size of the second iron phosphate ranges from 50 nm to 160 nm.

According to an embodiment of the present disclosure, a particle size $D_{50}$ of the first precursor is smaller than a particle size $D_{50}$ of the second precursor.

According to an embodiment of the present disclosure, a specific surface area of the first iron phosphate ranges from 8 $m^2/g$ to 14 $m^2/g$.

According to an embodiment of the present disclosure, a specific surface area of the second iron phosphate ranges from 6 $m^2/g$ to 10 $m^2/g$.

According to an embodiment of the present disclosure, the first iron phosphate has an iron-phosphorus (Fe/P) molar ratio ranging from 0.960 to 0.980.

According to an embodiment of the present disclosure, the second iron phosphate has a Fe/P molar ratio ranging from 0.950 to 0.970.

According to an embodiment of the present disclosure, the first lithium source and the second lithium source are each independently selected from one of lithium hydroxide, lithium carbonate, and lithium acetate.

According to an embodiment of the present disclosure, a lithium-iron (Li/Fe) molar ratio of the first lithium source to the first iron phosphate ranges from 1.01 to 1.07.

According to an embodiment of the present disclosure, a Li/Fe molar ratio of the second lithium source to the second iron phosphate ranges from 1.01 to 1.07.

According to an embodiment of the present disclosure, the first carbon source is selected from at least one of glucose, sucrose, starch, polyethylene glycol, or citric acid.

According to an embodiment of the present disclosure, an addition amount of the first carbon source that satisfies a mass ratio of carbon to the cathode active material ranges from 1.0 wt% to 1.8 wt%.

According to an embodiment of the present disclosure, the second carbon source is selected from at least one of glucose, sucrose, polyethylene glycol, or citric acid.

According to an embodiment of the present disclosure, an addition amount of the second carbon source that satisfies a mass ratio of carbon to the cathode active material ranges from 1.0 wt% to 1.4 wt%.

According to an embodiment of the present disclosure, a solid content of the first slurry ranges from 35 wt% to 50 wt%.

According to an embodiment of the present disclosure, a solid content of the second slurry ranges from 35 wt% to 50 wt%.

According to an embodiment of the present disclosure, the $D_{50}$ of the first slurry ranges from 0.25 $\mu$m to 0.45 $\mu$m.

According to an embodiment of the present disclosure, the $D_{50}$ of the second slurry ranges from 0.45 $\mu$m to 0.80 $\mu$m.

According to an embodiment of the present disclosure, the first spray drying treatment and the second spray drying treatment have each an inlet air temperature independently ranging from 200°C to 260°C and an outlet air temperature independently ranging from 80°C to 110°C.

According to an embodiment of the present disclosure, atomizer rotational speeds of the first spray drying treatment and the second spray drying treatment independently range from 30 Hz to 50 Hz.

According to an embodiment of the present disclosure, the first precursor and the second precursor have each a particle size $D_{50}$ independently ranging from 15 $\mu$m to 45 $\mu$m, and a water content of $\leq$ 3.0%.

According to an embodiment of the present disclosure, the first precursor and the second precursor are mixed in a mass ratio of (3:7) to (7:3).

According to an embodiment of the present disclosure, said sintering is performed at a temperature ranging from 750°C to 850°C for a duration ranging from 6 h to 12 h.

In a third aspect, the present disclosure provides a cathode plate. The cathode plate includes the cathode active material as described in the first aspect or the cathode active material prepared by the preparation method as described in the second aspect. Therefore, the electrode plate has a high compaction density, and can function well in electrochemical applications with a high capacity, a high rate capability, and excellent low-temperature performance.

In a fourth aspect, the present disclosure provides a battery. The battery includes the cathode plate as described in the third aspect. Therefore, the battery has good electrochemical performance.

In a fifth aspect, the present disclosure provides an electrical device. The electrical device includes the battery as described in the fourth aspect.

Additional aspects and advantages of the present disclosure will be provided in part in the following description, or will become apparent in part from the following description, or can be learned from practicing of the present disclosure.

## BRIEF DESCRIPTION OF THE DRAWINGS

The above and/or additional aspects and advantages of the present disclosure will become more apparent and more understandable from the following description of embodiments taken in conjunction with the accompanying drawings, in which:

FIG. 1 is a scanning electron microscope (SEM) image of a lithium-iron-phosphate cathode active material prepared in Example 1 of the present disclosure;

FIG. 2 is an X-ray diffraction (XRD) pattern of a lithium-iron-phosphate cathode active material prepared in Example 1 of the present disclosure;

FIG. 3 is a number-based particle size distribution curve of primary particles of a lithium-iron-phosphate cathode active material prepared in Example 1 of the present disclosure; and

FIG. 4 is a number-based particle size distribution curve of primary particles of a lithium-iron-phosphate cathode active material prepared in Comparative Example 1 of the present disclosure.

## DETAILED DESCRIPTION

The embodiments of the present disclosure will be described in detail below. The embodiments described below are illustrative only, and are intended to explain, rather than limiting, the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality of" means at least two, such as two, three, etc., unless otherwise specifically defined.

A "range" disclosed in the present disclosure is defined by a lower limit and an upper limit, and a given range is defined by selecting one lower limit and one upper limit, which define the boundaries of the particular range. A range defined in this manner may include end values or not, and may be arbitrarily combined, i.e., a range may be defined by any selected lower limit and any selected upper limit. For example, if a range of 60 to 120 and a range of 80 to 110 are listed for a specific parameter, it is understood that a range of 60 to 110 and a range of 80 to 120 are also expected for this parameter. In addition, if the minimum range end values 1 and 2 as well as the maximum range end values 3, 4 and 5 are listed, the following ranges are all expected: 1 to 3, 1 to 4, 1 to 5, 2 to 3, 2 to 4, and 2 to 5. In the present disclosure, unless otherwise specified, the value range "a to b" represents an abbreviated representation of any combination of real numbers between a and b, where both a and b are real numbers. For example, the value range "0 to 5" represents that all real numbers between "0 and 5" have been listed herein, and "0 to 5" only represents an abbreviated representation of combinations of these values. In addition, when a parameter is expressed as an integer greater than or equal to 2, it is equivalent to disclosing that the parameter is an integer, such as 2, 3, 4, 5, 6, 7, 8, 9, 10, 11, or 12.

Unless otherwise specified, all embodiments and optional embodiments of the present disclosure may be combined with each other to form new technical solutions.

Unless otherwise specified, all technical features and optional technical features of the present disclosure may be combined with each other to form new technical solutions.

Unless otherwise specified, all steps of the present disclosure may be performed sequentially or randomly, and preferably sequentially. For example, the method includes steps (a) and (b), meaning that the method may include steps (a) and (b) that are performed sequentially, or may include steps (b) and (a) that are performed sequentially. For example, the reference to the method may further include step (c), meaning that step (c) may be added to the method in any order. For example, the method may include steps (a), (b), and (c), or may further include steps (a), (c), and (b), or may further include steps (c), (a), and (b), or the like.

In a first aspect, the present disclosure provides a cathode active material. The cathode active material includes lithium iron phosphate. The lithium iron phosphate is secondary particles formed by agglomeration of primary particles. A number-based particle size distribution curve of the primary particles has three characteristic peaks: a first characteristic peak, a second characteristic peak, and a third characteristic peak. The first characteristic peak is the highest characteristic peak. A peak position $D_1$ of the first characteristic peak is in a range of 100 nm to 300 nm, and a number percentage $N_1$ corresponding to the peak position $D_1$ of the first characteristic peak ranges from 25% to 35%. A peak position $D_2$ of the second characteristic peak of the primary particles is in a range of 320 nm to 400 nm, and a number percentage $N_2$ corresponding to the peak position $D_2$ of the second characteristic peak ranges from 4% to 9%. A peak position $D_3$ of the third characteristic peak of the primary particles is in a range of 450 nm to 620 nm, and a number percentage $N_3$ corresponding to the peak position $D_3$ of the third characteristic peak ranges from 0.5% to 2%.

The number-based particle size distribution curve of the primary particles of the cathode active material provided in the present disclosure exhibits three characteristic peaks, indicating that the cathode active material contains primary particles with at least three types of particle size distributions. Specifically, it indicates that the cathode active material contains nano-sized single-crystal particles of different sizes, which can progressively fill voids among large particles, leading to a high compaction density. Meanwhile, the adopted co-doping modification with multiple metal elements is beneficial for formation of vacancies and valence variations within a crystal structure of the cathode active material, widens ion diffusion channels, and promotes mobility of lithium ions and mobility of electrons in the material, thereby improving electrical conductivity and an ion diffusion capacity at low temperatures. Thus, a secondary battery containing the cathode active material has better low-temperature performance.

The number-based particle size distribution curve is plotted with a particle size of the primary particles as the abscissa and a percentage of the total number of particles with the corresponding particle size relative to the total number of all particles as the ordinate.

According to a specific embodiment of the present disclosure, the peak position $D_2$ of the second characteristic peak of the primary particles is in a range of 320 nm to 400 nm, and the number percentage $N_2$ corresponding to the peak position $D_2$ of the second characteristic peak ranges from 4% to 9%. Therefore, this indicates that the primary particles include small particles within such a particle size range, which can further effectively fill the voids between large particles, allowing the cathode active material to achieve a high compaction density. An excessively large particle size results in an excessively long ion migration path, which reduces a capacity and charge-discharge efficiency. When the particle size is excessively small, a cycling life of the material is affected. Therefore, when the second characteristic peak falls within the range from 320 nm to 400 nm, the capacity and cycling performance of the particles themselves can be balanced, while achieving excellent low-temperature performance.

According to a specific embodiment of the present disclosure, there is a first minimum value $D_{12}$ between the first characteristic peak and the second characteristic peak. A particle size corresponding to the first minimum value $D_{12}$ ranges from 270 nm to 320 nm, and a number percentage $N_{12}$ corresponding to the first minimum value $D_{12}$ ranges from

3% to 6%. Therefore, the first characteristic peak and the second characteristic peak have a relatively distinct peak separation effect.

According to a specific embodiment of the present disclosure, a peak separation index $\gamma$ of the cathode active material ranges from 5% to 40%, in which: $\gamma=(N_2-N_{12})/N_2\times100\%$, where: $N_{12}$ is a number percentage corresponding to the first minimum value $D_{12}$ between the first characteristic peak and the second characteristic peak; and $N_2$ is a number percentage corresponding to the peak position $D_2$ of the second characteristic peak.

When particle size distribution of the first characteristic peak and/or the second characteristic peak are relatively wide, the first characteristic peak and the second characteristic peak may still appear in the mixed particle size distribution curve, but have no distinct peak separation effect, which is manifested as a volume percentage at a minimum value between the first characteristic peak and the second characteristic peak being relatively close to a volume percentage of the maximum value of the second characteristic peak. In this case, an effect of improving a compaction density of the particles is relatively small. Therefore, when the peak separation index $\gamma$ satisfies limitations of the present disclosure, on the one hand, large and small particles can be effectively distributed in the structure to form a filling effect, enabling the cathode active material to achieve a relatively high compaction density. On the other hand, excessively large particles are avoided in the mixture, allowing the large particles to maintain favorable performance such as capacity and cycling.

According to a specific embodiment of the present disclosure, a peak position $D_3$ of the third characteristic peak of the primary particles is in a range of 450 nm to 620 nm, and a number percentage $N_3$ corresponding to the peak position $D_3$ of the third characteristic peak ranges from 0.5% to 2%. Therefore, the compaction density is further improved, enabling the cathode active material to consist of small and large particles with specific particle sizes and achieve the closest packing, thereby increasing a compaction density of the prepared electrode plate.

According to a specific embodiment of the present disclosure, the number-based particle size distribution curve of the primary particles exhibits a second minimum value $D_{23}$ between the second characteristic peak and the third characteristic peak. A particle size corresponding to the second minimum value $D_{23}$ ranges from 400 nm to 500 nm, and a number percentage $N_{23}$ corresponding to the second minimum value $D_{23}$ ranges from 0.0% to 0.5%.

According to a specific embodiment of the present disclosure, $D_{50}$ of the primary particles ranges from 0.1 $\mu$m to 1.0 $\mu$m. As some specific examples, the $D_{50}$ of the primary particles may be 0.1 $\mu$m, 0.5 $\mu$m, 1.0 $\mu$m, or the like.

According to a specific embodiment of the present disclosure, $D_{50}$ of the secondary particles ranges from 0.7 $\mu$m to 2.0 $\mu$m. As some specific examples, the $D_{50}$ of the secondary particles may be 0.7 $\mu$m, 1 $\mu$m, 1.5 $\mu$m, 1.8 $\mu$m, 2.0 $\mu$m, or the like.

According to a specific embodiment of the present disclosure, a compaction density of the cathode active material ranges from 2.45 g/cm$^3$ to 2.65 g/cm$^3$. As some specific examples, the compaction density of the cathode active material may be 2.45 g/cm$^3$, 2.5 g/cm$^3$, 2.6 g/cm$^3$, 2.65 g/cm$^3$, or the like.

According to a specific embodiment of the present disclosure, a specific surface area of the cathode active material ranges from 10 m$^2$/g to 13 m$^2$/g. As some specific examples, the specific surface area of the cathode active material may be 10 m$^2$/g, 11 m$^2$/g, 12 m$^2$/g, 13 m$^2$/g, or the like.

According to a specific embodiment of the present disclosure, the cathode active material includes a matrix and a carbon coating layer coated on a surface of the matrix. The matrix has a composition represented by formula I: $Li_{1+a}Fe_bM_c(PO_4)_d$ Formula I, in which: $-0.1\leq a\leq0.1$, $0\leq b\leq1$, $0\leq c\leq0.5$, $0\leq d\leq1$; M is selected from at least one of La, Ce, Cr, Mo, Ca, Hf, Ti, Fe, Zn, Y, Zr, W, Nb, Sm, Sb, Co, Ni, V, Mg, Na, B, or Al; and preferably, M includes Nb and at least one of Al, Nb, W, Co, V, or Ti.

Preferably, M includes Nb and at least one of Al, Nb, W, Co, V, or Ti.

According to a specific embodiment of the present disclosure, based on a total weight of the cathode active material, a content of the carbon coating layer ranges from 0.5 wt% to 2 wt%. As some specific examples, the content of the carbon coating layer is 0.5 wt%, 1 wt%, 1.5 wt%, 2 wt%, or the like, and preferably ranges from 1 wt% to 1.5 wt%.

A second aspect of the present disclosure provides a preparation method for the aforementioned cathode active material. The preparation method includes the following steps.

Step 1: A first mixed solution containing first iron phosphate, a first lithium source, a first carbon source, and a first M source is prepared; the first mixed solution is then subjected to first grinding to obtain a first slurry; and a first spray drying treatment is performed on the first slurry to obtain a first precursor.

According to a specific embodiment of the present disclosure, a particle size of the first iron phosphate ranges from 80 nm to 200 nm. As some specific examples, the particle size of the first iron phosphate may be 80 nm, 100 nm, 150 nm, 200 nm, or the like.

According to a specific embodiment of the present disclosure, a specific surface area of the first iron phosphate ranges from 8 m$^2$/g to 14 m$^2$/g. As some specific examples, the specific surface area of the first iron phosphate may be 8 m$^2$/g, 10 m$^2$/g, 12 m$^2$/g, 14 m$^2$/g, or the like. Further, a Fe/P molar ratio the first iron phosphate ranges from 0.960 to 0.980, such as 0.960, 0.970, or 0.980.

According to a specific embodiment of the present disclosure, a specific type of the first lithium source is not specifically limited, and those skilled in the art may select it as desired. For example, the first lithium source may include at least one of lithium hydroxide, lithium carbonate, or lithium acetate, preferably lithium carbonate, and more preferably lithium carbonate with a purity of ≥99.5%.

According to a specific embodiment of the present disclosure, a Li/Fe molar ratio of the first lithium source to the first iron phosphate ranges from 1.01 to 1.07, such as 1.01, 1.02, 1.03, 1.04, 1.05, 1.06, or 1.07.

According to a specific embodiment of the present disclosure, a specific type of the first carbon source is not specifically limited, and those skilled in the art may select it as desired. For example, the first carbon source may include at least one of glucose, sucrose, starch, polyethylene glycol, or citric acid. Further, an addition amount of the first carbon source that satisfies a mass ratio of carbon to the cathode active material ranges from 1.0 wt% to 1.8 wt%, such as 1.0 wt%, 1.2 wt%, 1.4 wt%, 1.6 wt%, or 1.8 wt%.

According to a specific embodiment of the present disclosure, a specific type of the first M source is not specifically limited, and those skilled in the art may select it as desired. For example, the first M source may include at least one of salts, hydroxides, or oxides capable of providing at least one element selected from La, Ce, Cr, Mo, Ca, Hf, Ti, Fe, Zn, Y, Zr, W, Nb, Sm, Sb, Co, Ni, V, Mg, Na, B, and Al. Preferably, the first M source includes at least one of aluminum oxide, titanium dioxide, ammonium metavanadate, tungsten trioxide, magnesium oxide, cobalt oxyhydroxide, or niobium pentoxide. Addition amounts of the titanium dioxide, ammonium metavanadate, tungsten trioxide, and niobium pentoxide are controlled such that contents of titanium, vanadium, tungsten, and niobium in a target cathode active material range from 1,000 ppm to 5,000 ppm, from 1,000 ppm to 2,000 ppm, from 500 ppm to 2,000 ppm, and from 500 ppm to 2,000 ppm, respectively.

According to a specific embodiment of the present disclosure, a preparation manner of the first mixed solution is not specifically limited, and does not affect subsequent steps such as grinding and spray drying. Specifically, the first mixed solution may be obtained by dissolving the first iron phosphate, the first lithium source, the first carbon source, and the first M source in a solvent. The solvent includes, but is not limited to, deionized water.

According to a specific embodiment of the present disclosure, a solid content of the first slurry ranges from 35 wt% to 50 wt%, and said grinding is performed such that a particle size $D_{50}$ of the first slurry ranges from 0.25 μm to 0.45 μm. The grinding manner is not specifically limited, and those skilled in the art may select it as desired, as long as the particle size of the slurry falls within a target range. Specifically, manners such as sand milling may be used.

According to a specific embodiment of the present disclosure, an inlet air temperature and an outlet air temperature of the first spray drying treatment are not specifically limited, as long as drying of the slurry is achieved. Preferably, a water content of the product after being subjected to the spray drying, i.e., a water content of the first precursor, is ≤3.0%. As some specific examples, the inlet air temperature of the first spray drying treatment may range from 200°C to 260°C, and the outlet air temperature may range from 80°C to 110°C. Meanwhile, an atomizer rotational speed of the first spray drying treatment may range from 30 Hz to 50 Hz.

According to a specific embodiment of the present disclosure, a particle size $D_{50}$ of the first precursor is smaller than a particle size $D_{50}$ of a second precursor. As some specific examples, the particle size $D_{50}$ of the first precursor and the particle size $D_{50}$ of the second precursor may each independently range from 15 μm to 45 μm. Such a particle size can be achieved by crushing after the spray drying treatment.

Step 2: A second mixed solution containing second iron phosphate, a second lithium source, a second carbon source, and a second M source is prepared; the second mixed solution is ground to obtain a second slurry; and a second spray drying treatment is performed on the second slurry to obtain a second precursor.

According to a specific embodiment of the present disclosure, a particle size of the second iron phosphate ranges from 50 nm to 160 nm. As some specific examples, the particle size of the second iron phosphate may be 50 nm, 70 nm, 100 nm, 130 nm, 160 nm, or the like.

According to a specific embodiment of the present disclosure, a specific surface area of the second iron phosphate ranges from 6 m²/g to 10 m²/g. As some specific examples, the specific surface area of the second iron phosphate may be 6 m²/g, 7 m²/g, 8 m²/g, 9 m²/g, 10 m²/g, or the like. Further, a Fe/P molar ratio the second iron phosphate ranges from 0.950 to 0.970, such as 0.950, 0.960, or 0.970.

According to a specific embodiment of the present disclosure, a specific type of the second lithium source is not specifically limited, and those skilled in the art may select it as desired. For example, the second lithium source may include at least one of lithium hydroxide, lithium carbonate, or lithium acetate, preferably lithium carbonate, and more preferably lithium carbonate with a purity of ≥99.5%.

According to a specific embodiment of the present disclosure, a Li/Fe molar ratio of the second lithium source to the second iron phosphate ranges from 1.01 to 1.07. For example, the Li/Fe molar ratio is 1.01, 1.02, 1.03, 1.04, 1.05, 1.06, 1.07, or the like.

According to a specific embodiment of the present disclosure, a specific type of the second carbon source is not specifically limited, and those skilled in the art may select it as desired. For example, the second carbon source may include at least one of glucose, sucrose, polyethylene glycol, or citric acid. Further, an addition amount of the second carbon source that satisfies a mass ratio of carbon to the cathode active material ranges from 1.0 wt% to 1.4 wt%, such as 1.0 wt%, 1.2 wt%, or 1.4 wt%.

According to a specific embodiment of the present disclosure, a specific type of the second M source is not specifically limited, and those skilled in the art may select it as desired. For example, the second M source may include at least one of salts, hydroxides, or oxides capable of providing at least one element selected from La, Ce, Cr, Mo, Ca, Hf, Ti, Fe, Zn, Y, Zr, W, Nb, Sm, Sb, Co, Ni, V, Mg, Na, B, and Al. Preferably, the second M source includes at least one of aluminum oxide, titanium dioxide, ammonium metavanadate, tungsten trioxide, magnesium oxide, cobalt oxyhydroxide, or niobium pentoxide. Addition amounts of the titanium dioxide, ammonium metavanadate, and tungsten trioxide are controlled such that the contents of titanium, vanadium, and tungsten in the target cathode active material range from 1,000 ppm to 5,000 ppm, from 1,000 ppm to 2,000 ppm, and from 500 ppm to 2,000 ppm, respectively.

According to a specific embodiment of the present disclosure, a preparation manner of the second mixed solution is not specifically limited, and does not affect subsequent steps such as grinding and spray drying. Specifically, the second mixed solution may be obtained by dissolving the second iron phosphate, the second lithium source, the second carbon source, and the second M source in a solvent. The solvent includes, but is not limited to, deionized water.

According to a specific embodiment of the present disclosure, $D_{50}$ of the first slurry is smaller than $D_{50}$ of the second slurry. Preferably, a difference between the $D_{50}$ of the first slurry and the $D_{50}$ of the second slurry is greater than 0.2 $\mu$m. By preparing slurries with different particle sizes, precursors with different particle sizes are obtained and mixed together, thereby mixing grading of large and small particles at a precursor stage. Through the subsequent sintering and crystallization, the particle size evolves with lateral growth of primary particles, which significantly optimizes the particle grading of the material. This results in tighter interparticle bonding, facilitating the preparation of a cathode active material that achieves both high capacity and high compaction density. When the difference between the $D_{50}$ of the first slurry and the $D_{50}$ of the second slurry is greater than 0.2 $\mu$m, a better mixing effect is achieved.

According to a specific embodiment of the present disclosure, a solid content of the second slurry ranges from 35 wt% to 50 wt%, and said grinding is performed such that the particle size $D_{50}$ of the second slurry ranges from 0.45 $\mu$m to 0.80 $\mu$m. The grinding manner is not specifically limited, and those skilled in the art may select it as desired, as long as the particle size of the slurry falls within the target range. Specifically, manners such as sand milling may be used.

According to a specific embodiment of the present disclosure, an inlet air temperature and an outlet air temperature of the second spray drying treatment are not specifically limited, as long as the slurry can be dried. Preferably, a water content of the product after being subjected to the spray drying (i.e., the second precursor) is ≤3.0%. As some specific examples, the inlet air temperature of the second spray drying treatment may range from 200°C to 260°C, and the outlet air temperature may range from 80°C to 110°C. Meanwhile, an atomizer rotational speed of the second spray drying treatment may range from 30 Hz to 50 Hz.

Step 3: The first precursor and the second precursor are mixed, and the mixture is sintered to obtain the cathode active material.

According to a specific embodiment of the present disclosure, a mixing ratio of the first precursor to the second precursor is not specifically limited, and those skilled in the art may adjust it reasonably as desired. As some specific examples, the first precursor and the second precursor are mixed in a mass ratio of (3:7) to (7:3), such as 3:7, 2:3, 1:1, 3:2, or 7:3.

According to a specific embodiment of the present disclosure, a sintering temperature and duration are not specifically limited, and those skilled in the art may adjust them reasonably as desired. As some specific examples, said sintering may be performed at a temperature ranging from 750°C to 850°C for a duration ranging from 6 h to 12 h. Further, the sintering is preferably performed in an inert atmosphere, such as nitrogen.

A third aspect of the present disclosure provides a cathode plate. The cathode plate includes the cathode active material according to the first aspect of the present disclosure or the cathode active material prepared by the method according to the second aspect of the present disclosure.

The cathode plate usually includes a cathode current collector and a cathode active material layer arranged on the cathode current collector. The cathode active material layer includes the cathode active material.

The cathode current collector may be a conventional metal foil or composite current collector (that may be formed by arranging a metal material on a polymer substrate). As an example, the cathode current collector may include at least one of a copper foil, an aluminum foil, a nickel foil, a stainless steel foil, a stainless steel mesh, or a carbon-coated aluminum foil.

The cathode active material includes the cathode active material according to the first aspect of the present disclosure or the cathode active material prepared by the method according to the second aspect of the present disclosure.

The cathode active material layer may optionally further include a conductive agent and a binder. The conductive agent is used for improving electrical conductivity of the cathode active material layer, and the binder is used for firmly bonding the cathode active material and the binder to the cathode current collector. A type of the conductive agent and a type of the binder are specifically limited in the present disclosure, and may be selected as desired.

As an example, the conductive agent may include at least one of superconducting carbon, acetylene black, carbon black, Ketjen black, carbon dots, carbon nanotubes, graphene, or carbon nanofibers. The binder may include at least one of polyvinylidene fluoride (PVDF), vinylidene fluoride copolymers, or their modified derivatives (such as modified with carboxylic acid, acrylic acid, or acrylonitrile).

All these materials are commercially available.

A fourth aspect of the present disclosure provides a battery. The battery includes the cathode plate according to the third aspect of the present disclosure. Therefore, the battery has an excellent cycling life.

The battery refers to a battery that can be continuously used by activating an active material by means of charging after the battery is discharged.

It can be understood that the battery proposed in the present disclosure is a lithium-ion battery.

Generally, the battery includes a cathode plate, an anode plate, a separator, and an electrolyte. During charging and discharging of the battery, active ions are intercalated and deintercalated between the cathode plate and the anode plate. The separator is arranged between the cathode plate and the anode plate, playing the role of isolation. The electrolyte between the cathode plate and the anode plate serves to conduct active ions.

[Anode plate]

In the battery, the anode plate may be made of lithium metal or a lithium-containing alloy.

In some embodiments, in order to further improve an energy density of the battery, an anode active material may include a silicon-based material.

An anode active material layer usually may further optionally include a binder, a conductive agent, and other optional additives.

As an example, the conductive agent may include one or more of superconducting carbon, acetylene black, carbon black, Ketjen black, carbon dots, carbon nanotubes, graphene, and carbon nanofibers.

As an example, the binder may include one or more of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional additives may include a thickener and a dispersant (such as sodium carboxymethyl cellulose (CMC-Na)) and a PTC thermistor material.

[Electrolyte]

The electrolyte may include an electrolyte salt and a solvent.

As an example, the electrolyte salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bis-trifluoromethyl sulfonimide (LiTFSI), lithium triflate (LiTFS), lithium difluorooxalato borate (LiDFOB), lithium bis(oxalato) borate (LiBOB), lithium difluorophosphate ($LiPO_2F_2$), lithium difluoro bis(oxalato) phosphate (LiDFOP), and lithium tetrafluorooxalato phosphate (LiTFOP).

As an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), or diethyl sulfone (ESE).

In some embodiments, the electrolyte may further include an additive. For example, the additive may include an anode film-forming additive, a cathode film-forming additive, or an additive capable of improving certain properties of the battery, such as an additive for improving overcharge performance of the battery, an additive for improving high-temperature performance of the battery, or an additive for improving low-temperature performance of the battery.

[Separator]

The present disclosure has no special restrictions on the aforementioned separator. Any known porous separator with electrochemical stability and mechanical stability can be selected as desired. For example, the separator may include a combination of at least one of polyethylene, polypropylene, polyvinylidene fluoride, aramid, polyethylene terephthalate, polytetrafluoroethylene, polyacrylonitrile, polyimide, polyamide, polyester, or natural fibers.

A fifth aspect of the present disclosure provides an electrical device. The electrical device includes the battery according to the fourth aspect. In some embodiments, the battery may be used as a power source or energy storage unit for the electrical device. The electrical device may include, but is not limited to, mobile equipment (such as cell phones and notebook computers), electric vehicles (such as pure electric vehicles, hybrid electric vehicles, plug-in hybrid electric vehicles, electric bicycles, electric scooters, electric golf carts, and electric trucks), electric trains, ships and satellites, and energy storage systems.

The solutions of the present disclosure will be explained below in conjunction with the Examples. Those skilled in the art will understand that the following examples are only for illustrating the present disclosure and should not be regarded as limiting the scope of the present disclosure. The specific techniques or conditions not indicated in the Examples are implemented based on the techniques or conditions described in the related art or based on product specifications. The used reagents or instruments without specifying the manufacturer are all conventional products commercially available.

Relevant parameters in the following Examples and Comparative Examples were tested by the following methods.

(1) Morphology test: conducted using a scanning electron microscope model Regulus 8100, manufactured by Hitachi, Japan.

(2) X-ray diffraction (XRD) test: conducted using an X-ray diffractometer model SmartLab 9kW, manufactured by Rigaku, Japan.

(3) Median particle size $D_{50}$: measured using a laser particle size analyzer model Mastersizer 3000, manufactured by Malvern.

(4) Average size of the primary particles: a scanning electron microscope image of the prepared lithium-iron-phosphate cathode active material was captured at 30.0K magnification, and the average size of the primary particles of the prepared lithium-iron-phosphate cathode active material was calculated using LIBMAS and Nano Measurer software.

(5) Specific surface area (BET) test: conducted using a specific surface area analyzer model Tristar 3020, manufactured by Micromeritics.

(6) Powder compaction density test: 1 g of the prepared lithium-iron-phosphate cathode active material was weighed and placed into a pallet mold, which was then placed into a pallet device, and the test result was obtained under a pressure of 30 KN.

(7) Particle size number distribution test: a scanning electron microscope image of the prepared lithium-iron-phosphate cathode active material was captured at 30.0K magnification, and a statistical treatment was performed on the data using LIBMAS analysis software to obtain particle size number distribution.

(8) Electrochemical performance test: conducted using a button half-cell, with a test voltage ranging from 2.5 V to 4.2 V. The battery was charged in a constant current-constant voltage charging mode to 4.2 V, and then discharged in a constant-current discharging mode to 2.5 V, with this process repeated at a charge-discharge current of 0.1 C for 2 cycles, followed by 0.2 C for 1 cycle, 0.33 C for 1 cycle, 0.5 C for 1 cycle, 1 C for 1 cycle, and 2 C for 1 cycle. Cut-off voltage conditions were the same as those for the test at 0.1C.

**Example 1**

[Preparation of a lithium-iron-phosphate cathode active material]

(1) 5,005.0 g of iron phosphate with a Fe/P molar ratio of 0.970 and a particle size of 110 nm was mixed with 1,235.10 g of lithium carbonate. 420 g of glucose and 150 g of polyethylene glycol, together with 16.32 g of titanium dioxide, 12.10 g of ammonium metavanadate, 4.68 g of niobium pentoxide, and 11,250 g of pure water were added into a stirring mill and mixed to form a first mixed solution. The first mixed solution was pumped into a sand mill for sand grinding at a temperature below 45°C, with a sand-milled particle size $D_{50}$ controlled at 0.30 μm and a solid content controlled at 38 wt%, resulting in a first slurry.

The first slurry was subjected to spray drying, while controlling an inlet air temperature at 250°C, an outlet air temperature at 100°C, and an atomizer rotational speed at 50 Hz, to obtain a first precursor with a particle size $D_{50}$ of 15 μm and a moisture content ≤ 3.0%.

(2) 4,009.0 g of iron phosphate with a Fe/P molar ratio of 0.960 and a particle size of 150 nm was mixed with 985.0 g of lithium carbonate. 305 g of glucose and 120 g of polyethylene glycol, together with 8.20 g of titanium dioxide and 8,830 g of pure water, were added into the stirring mill and mixed to obtain a second mixed solution. The second mixed solution was pumped into the sand mill for sand grinding at a temperature below 45°C, while controlling a sand-milled particle size $D_{50}$ at 0.70 μm and a solid content at 38 wt%, resulting in a second slurry.

The second slurry was subjected to spray drying, while controlling a feed inlet temperature at 250°C, a discharge outlet temperature at 100°C, and an atomizer rotational speed at 34 Hz, to obtain a second precursor with a particle size $D_{50}$ of 40 μm and a moisture content ≤ 3.0%.

(3) The first precursor and the second precursor were mixed in a high-speed mixer at a mass ratio of 7:3, then calcined at a high temperature under a nitrogen atmosphere, with sintering controlled to be performed at a temperature of 790°C for a duration of 10 h. The calcined product was then crushed, with a particle size $D_{50}$ controlled at 1.4 $\mu$m and an average primary particle size controlled at 172 nm, thus obtaining the lithium-iron-phosphate cathode active material with a high compaction density.

[Preparation of a cathode plate]

The prepared lithium-iron-phosphate cathode active material, 50% Compressed Denka Black (acetylene black at a compression ratio of 50%), and polyvinylidene fluoride (PVDF) were dispersed in N-methylpyrrolidone (NMP) at a mass ratio of 96.5:1.5:2. After uniform dispersion by ball milling, the mixture was coated on an aluminum foil and dried under vacuum to prepare the cathode plate.

[Preparation of an anode plate]

A Li metal sheet was used as an anode plate.

[Preparation of an electrolyte]

1.0 mol/L LiPF$_6$ solution was used as the electrolyte. A mixture of equal volumes of ethylene carbonate (EC), ethyl methyl carbonate (EMC), and diethyl carbonate (DEC) was used as a solvent.

[Separator]

A Celgard polypropylene membrane was used as the separator.

The cathode plate, the separator, the anode plate, and the electrolyte were assembled into a button half-cell.

The lithium-ion batteries containing a cathode active material in Examples 2 to 6 and Comparative Example 1 were substantially the same that in Example 1, except for differences in some parameters (see Table 1). Moreover, by adjusting a type and an addition amount of element M, compounds were made to have a composition shown in Table 3.

In Example 4, "titanium dioxide, ammonium metavanadate, and niobium pentoxide" in Step (1) of Example 1 were replaced with "titanium dioxide, a Y-containing compound, and a Mg-containing compound". In Example 6, the "titanium dioxide, ammonium metavanadate, and niobium pentoxide" in Step (1) of Example 1 were replaced with "titanium dioxide, a Zr-containing compound, and a Sb-containing compound".

Compared with Example 1, in Comparative Example 1, the atomizer rotational speeds of the first spray drying treatment and the second spray drying treatment, $D_{50}$ of the first precursor and the $D_{50}$ of the second precursor, and the size of the $D_{50}$ of the second slurry were adjusted.

A specific solution of Comparative Example 2 was as follows:

(1) 2,785.0 g of iron phosphate with a Fe/P molar ratio of 0.970, a specific surface area of 10.0 m$^2$/g, and a particle size of 110 nm, 1,195.0 g of iron phosphate with a Fe/P molar ratio of 0.960, a specific surface area of 8.0 m$^2$/g, and a particle size of 150 nm, and 984.30 g of lithium carbonate were mixed. 310 g of glucose and 120 g of polyethylene glycol, together with 16.80 g of titanium dioxide, 13.50 g of ammonium metavanadate, and 8,870 g of pure water were added into a stirring mill and mixed to obtain a first mixed solution. The first mixed solution was pumped into a sand mill for sand grinding at a temperature below 45°C, while controlling a sand-milled particle size $D_{50}$ at 0.30 $\mu$m and a solid content at 38 wt%, resulting in a first slurry.

The first slurry was subjected to spray drying, while controlling a feed inlet temperature at 245°C, a discharge outlet temperature at 95°C, and an atomizer rotational speed at 35 Hz, to obtain a first precursor with a particle size $D_{50}$ of 25 $\mu$m and a moisture content $\leq$ 3.0%.

(2) First precursor powder was calcined at a high temperature under a nitrogen atmosphere, while controlling the sintering to be performed at a temperature of 790°C for a duration of 10 h. The calcined product was then crushed, while controlling a particle size $D_{50}$ at 1.6 $\mu$m and an average primary particle size at 200 nm, thus obtaining a lithium-iron-phosphate cathode active material.

Comparative Example 3 differed from Comparative Example 2 that a size of $D_{50}$ of the first slurry and a size of $D_{50}$ of the first precursor were adjusted.

Particle size distribution data of primary particles of the cathode active materials obtained in Examples 1 to 6 and Comparative Examples 1 to 3 are shown in Table 2, and performance parameters of the cathode active materials are shown in Table 3.

Example 2 differed from Example 1 in that a mixing ratio of the first slurry and the second slurry was adjusted. Example 3 differed from Example 1 in that a particle size of the second iron phosphate, $D_{50}$ of the second slurry, and an atomizer rotational speed of the second spray drying treatment were adjusted. Example 4 differed from Example 1 in that the M source was changed from V and Nb to Y and Mg. Example 5 differed from Example 1 in that the particle size of the first iron phosphate, $D_{50}$ of the first slurry and $D_{50}$ of the second slurry, the atomizer rotational speeds of the first spray drying treatment and the second spray drying treatment, and $D_{50}$ of the first precursor and the $D_{50}$ of the second precursor were adjusted. Example 6 differed from Example 1 in the size of the $D_{50}$ of the second precursor and in that the M source was changed from V and Nb to Zr and Sb.

Comparative Example 1 differed from Example 1 in terms of the atomizer rotational speeds of the first spray drying treatment and the second spray drying treatment, $D_{50}$ of the first precursor and the $D_{50}$ of the second precursor, and the size of the $D_{50}$ of the second slurry. Comparative Example 2 differed from Example 1 in that a mixed solution containing the first iron phosphate and a mixed solution containing the second iron phosphate were mixed together, followed by grinding, drying, and calcination, instead of separately preparing the first slurry and the second slurry. In addition, Comparative Example 2 further differed from Example 1 in that niobium pentoxide was not included in raw materials. In addition to the differences of Comparative Example 2 from Example 1, Comparative Example 3 further differed from Example 1 in $D_{50}$ of the first slurry and $D_{50}$ of the first precursor.

[Table 1]

| Group | Particle size of first iron phosphate | $D_{50}$ of first slurry | Atomizer rotational speed of first spray drying treatment | $D_{50}$ of first precursor | Particle size of second iron phosphate | $D_{50}$ of second slurry | Atomizer rotational speed of second spray drying treatment | $D_{50}$ of second precursor | Mass ratio of precursor mixing |
|---|---|---|---|---|---|---|---|---|---|
| Example 1 | 110 nm | 0.30 μm | 50 Hz | 15 μm | 150 nm | 0.70 μm | 34 Hz | 40 μm | 7:3 |
| Example 2 | 110 nm | 0.30 μm | 50 Hz | 15 μm | 150 nm | 0.70 μm | 34 Hz | 40 μm | 5:5 |
| Example 3 | 110 nm | 0.30 μm | 50 Hz | 15 μm | 50 nm | 0.45 μm | 38 Hz | 40 μm | 7:3 |
| Example 4 | 110 nm | 0.30 μm | 50 Hz | 15 μm | 150 nm | 0.70 μm | 34 Hz | 40 μm | 7:3 |
| Example 5 | 170 nm | 0.45 μm | 47 Hz | 18 μm | 150 nm | 0.75 μm | 45 Hz | 20 μm | 7:3 |
| Example 6 | 110 nm | 0.30 μm | 50 Hz | 15 μm | 150 nm | 0.70 μm | 34 Hz | 39 μm | 7:3 |
| Comparative Example 1 | 110 nm | 0.30 μm | 38 Hz | 25 μm | 150 nm | 0.30 μm | 38 Hz | 25 μm | 7:3 |
| Comparative Example 2 | 110 nm+ 150 nm | 0.30 μm | 30 Hz | 45 μm | / | / | | / | / |
| Comparative Example 3 | 110 nm+ 150 nm | 0.70 μm | 50 Hz | 15 μm | / | / | | / | / |

In Table 1, "/" indicates no addition or absence.

[Table 2]

| Item | | Unit | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| $D_{50}$ of primary particles | | μm | 0.17 | 0.18 | 0.14 | 0.16 | 0.19 | 0.18 | 0.20 | 0.17 | 0.22 |
| First characteristic peak | Peak position $D_1$ | nm | 190 | 190 | 170 | 180 | 204 | 190 | 200 | 190 | 210 |
| | Number percentage $N_1$ | % | 27.99 | 28.52 | 29.33 | 32.12 | 30.55 | 31.23 | 28.75 | 30.32 | 31.20 |
| First minimum value | First minimum value $D_{12}$ | nm | 310 | 310 | 280 | 300 | 319 | 310 | / | / | / |
| | Number percentage $N_{12}$ | % | 4.85 | 5.13 | 4.90 | 5.63 | 4.77 | 4.90 | / | / | / |
| Second characteristic peak | Peak position $D_2$ | nm | 350 | 355 | 360 | 355 | 360 | 350 | / | / | / |
| | Number percentage $N_2$ | % | 5.22 | 5.55 | 5.34 | 6.88 | 5.97 | 5.42 | / | / | / |
| peak separation index γ | | % | 7.09 | 7.57 | 8.24 | 18.17 | 20.10 | 9.59 | / | / | / |
| Second minimum value | Second minimum value $D_{23}$ | nm | 460 | 480 | 460 | 463 | 490 | 464 | / | / | / |
| | Number percentage $N_{23}$ | % | 0.35 | 0.42 | 0.38 | 0.44 | 0.45 | 0.39 | / | / | / |
| Third characteristic peak | Peak position $D_3$ | nm | 500 | 510 | 500 | 503 | 510 | 507 | / | / | / |
| | Number percentage $N_3$ | % | 0.75 | 1.22 | 0.97 | 1.05 | 1.24 | 1.13 | / | / | / |
| Powder compaction density | | g/cm3 | 2.64 | 2.62 | 2.60 | 2.57 | 2.57 | 2.58 | 2.52 | 2.50 | 2.54 |

In Table 2, "/" indicates no addition or absence.

[Table 3]

| | Composition of matrix | Average primary particle size (nm) | BET (m²/g) | Powder compaction density (g/cm³) | 0.1C discharge capacity (mAh/g) | 1C discharge capacity (mAh/g) | Low-temperature capacity retention rate at 0.3C @-10°C (%) |
|---|---|---|---|---|---|---|---|
| Example 1 | $Li_{1.02}Fe_{0.97}Ti_{0.012}Nb_{0.003}V_{0.004}PO_4$ | 172 | 12.0 | 2.64 | 159.0 | 144.2 | 70.4 |
| Example 2 | $Li_{1.02}Fe_{0.97}Ti_{0.012}Nb_{0.003}V_{0.004}PO_4$ | 184 | 11.8 | 2.62 | 158.7 | 144.7 | 69.8 |
| Example 3 | $Li_{1.02}Fe_{0.97}Ti_{0.012}Nb_{0.003}V_{0.004}PO_4$ | 147 | 12.7 | 2.60 | 157.3 | 142.5 | 69.1 |
| Example 4 | $Li_{1.02}Fe_{0.97}Ti_{0.012}Y_{0.003}Mg_{0.004}PO_4$ | 165 | 12.1 | 2.57 | 158.5 | 143.3 | 68.7 |
| Example 5 | $Li_{1.02}Fe_{0.97}Ti_{0.012}Nb_{0.004}V_{0.004}PO_4$ | 155 | 12.4 | 2.57 | 158.4 | 144.3 | 70.2 |
| Example 6 | $Li_{1.02}Fe_{0.97}Ti_{0.012}Zr_{0.003}Sb_{0.004}PO_4$ | 191 | 11.5 | 2.58 | 158.0 | 142.7 | 68.5 |
| Comparative example 1 | $Li_{1.02}Fe_{0.97}Ti_{0.012}Nb_{0.003}V_{0.004}PO_4$ | 200 | 11.3 | 2.52 | 155.0 | 140.8 | 63.8 |
| Comparative example 2 | $Li_{1.02}Fe_{0.97}Ti_{0.012}V_{0.007}PO_4$ | 176 | 12.0 | 2.50 | 156.3 | 141.3 | 64.1 |
| Comparative example 3 | $Li_{1.02}Fe_{0.97}Ti_{0.012}V_{0.007}PO_4$ | 221 | 10.6 | 2.54 | 156.0 | 140.8 | 63.0 |

**EP 4 779 719 A1**

Result analysis:

Compared with Comparative Examples 1 to 3, the cathode active materials prepared by the method provided in the present disclosure (i.e., Examples 1 to 6) exhibited each a higher compaction density, a higher capacity, a better rate capability, and superior low-temperature performance.

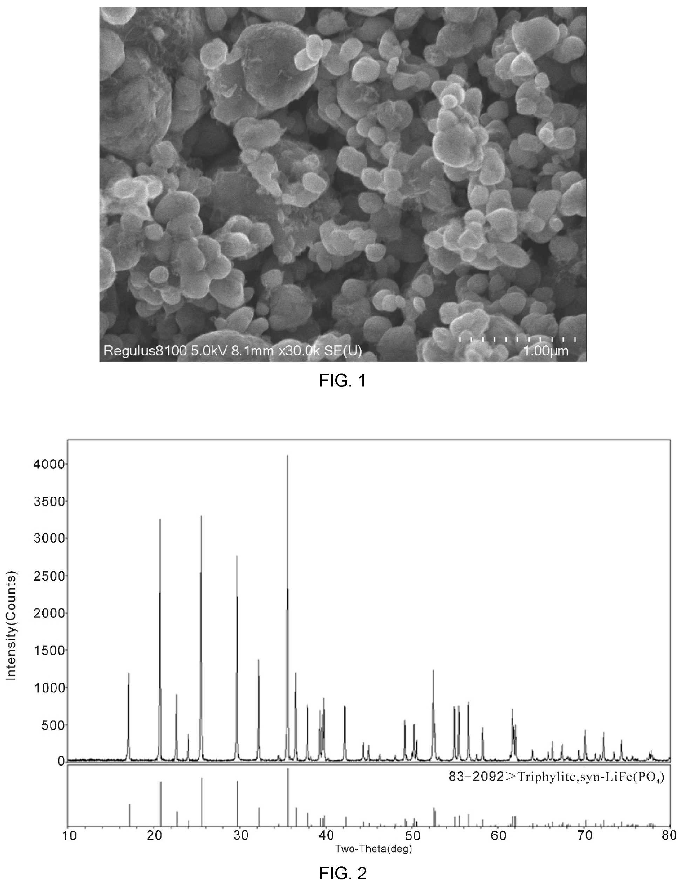

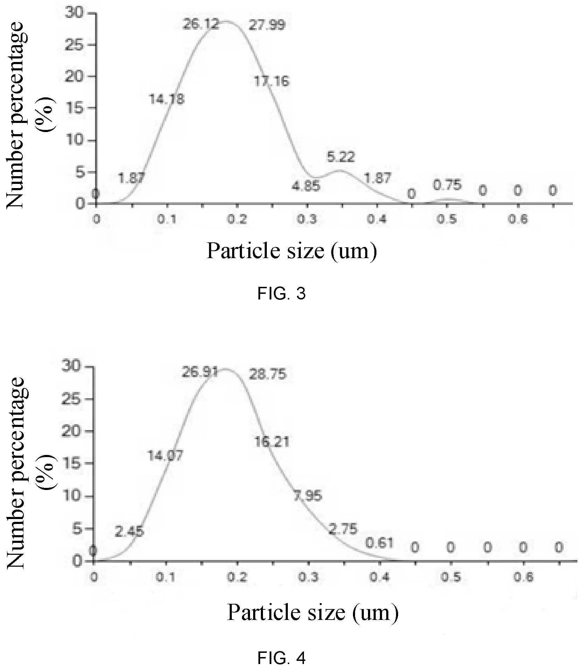

FIG. 1 shows an SEM image of a lithium-iron-phosphate cathode active material prepared in Example 1, from which mixed particles with various particle sizes can be observed. FIG. 2 shows a corresponding XRD pattern of the material, from which a lithium iron phosphate structure in the material can be observed. FIG. 3 shows a number-based particle size distribution curve of primary particles of the material, from which three distinct characteristic peaks in the material can be observed.

Similarly, the other examples also achieve the same excellent effects. Compared with Example 1, the particle size of the second iron phosphate and the size of the $D_{50}$ of the second slurry in Example 3 were adjusted, resulting in a smaller difference (0.15 $\mu$m) between the $D_{50}$ of the first slurry and the $D_{50}$ of the second slurry. Compared with Examples 1, 2, and 4 with relatively greater difference between the $D_{50}$ of the first slurry and the $D_{50}$ of the second slurry, a grading effect of Example 3 was slightly reduced, but still superior to those of Comparative Examples 1 to 3, indicating that the difference between the $D_{50}$ of the first slurry and the $D_{50}$ of the second slurry being greater than 0.2 $\mu$m is more beneficial for the realization of a high compaction density and better electrochemical performance.

Compared with Example 1, Example 4 adopted different M elements (changed from V and Nb to Y and Mg). The result shows that: the compaction density of the cathode active material of Example 4 decreased, and the capacity and the low-temperature capacity retention rate of the battery containing this cathode active material also decreased, which were nevertheless still superior to those of Comparative Examples 1 to 3. This indicates that V or Nb source is the preferable M source. Compared with Example 1, Example 6 also adopted different M elements (changed from V and Nb to Zr and Sb). The result shows that: the compaction density of the cathode active material of Example 6 decreased, and the capacity and the low-temperature capacity retention rate of the battery containing this cathode active material also decreased, which were nevertheless still superior to those of Comparative Examples 1 to 3. This indicates that V or Nb source is the preferable M source.

Comparative Example 1 differed from Example 1 in that the atomizer rotational speeds of the first spray drying treatment and the second spray drying treatment, $D_{50}$ of the first precursor and the $D_{50}$ of the second precursor, and the size of the $D_{50}$ of the second slurry were adjusted. In Comparative Example 1, the first slurry and the second slurry had the same $D_{50}$, and the prepared precursors also have the same $D_{50}$. That is, although the preparation of Comparative Example 1 adopted iron phosphate with different particle sizes, the material failed to achieve multi-level mixing as $D_{50}$ of the first slurry and $D_{50}$ of the second slurry were not controlled within certain ranges. Therefore, the compaction density of the cathode active material prepared in Comparative Example 1 decreased, and the capacity and the low-temperature capacity retention rate of the battery containing this material also decreased.

Comparative Example 2 differed from Example 1 in that two materials with different particle sizes were directly mixed, followed by grinding, drying, and calcination. As results, the preparation of Comparative Example 2 failed to achieve mixed grading of large and small particles at a slurry stage, resulting in only one type of precursor. Such a deficiency was further amplified during subsequent calcination. As can be seen from FIG. 4, the number-based particle size distribution curve of the primary particles of the material of Comparative Example 2 exhibited only one significant characteristic peak, further substantiating that the material failed to achieve the multi-level mixing. Therefore, the compaction density of the cathode active material prepared in Comparative Example 2 decreased, and the capacity and the low-temperature capacity retention rate of the battery containing the material also decreased.

Similarly, Comparative Example 3 adopted the similar preparation as Comparative Example 2, merely differing in $D_{50}$ of the first slurry and $D_{50}$ of the first precursor. The result shows that the material of Comparative Example 3 failed to achieve the multi-level mixing, leading to a decrease in the compaction density of the prepared cathode active material and a reduction in the capacity and the low-temperature capacity retention rate of the battery containing the material.

In the specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In the specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Although embodiments according to the present disclosure have been shown and described, it would be appreciated by those skilled in the art that the above embodiments are illustrative and cannot be construed to limitation on the present disclosure, and changes, alternatives, modifications, and variations can be made in the embodiments without departing from scope of the present disclosure.

**Claims**

1. A cathode active material, comprising lithium iron phosphate, the lithium iron phosphate being secondary particles formed by agglomeration of primary particles, wherein a number-based particle size distribution curve of the primary particles has three characteristic peaks:

   a first characteristic peak, the first characteristic peak being the highest characteristic peak, a peak position $D_1$ of the first characteristic peak being in a range of 100 nm to 300 nm, and a number percentage $N_1$ corresponding to the peak position $D_1$ of the first characteristic peak ranging from 25% to 35%;
   a second characteristic peak, a peak position $D_2$ of the second characteristic peak of the primary particles being in a range of 320 nm to 400 nm, and a number percentage $N_2$ corresponding to the peak position $D_2$ of the second characteristic peak ranging from 4% to 9%; and
   a third characteristic peak, a peak position $D_3$ of the third characteristic peak of the primary particles being in a range of 450 nm to 620 nm, and a number percentage $N_3$ corresponding to the peak position $D_3$ of the third characteristic peak ranging from 0.5% to 2%.

2. The cathode active material according to claim 1, wherein:

   the number-based particle size distribution curve of the primary particles exhibits a first minimum value $D_{12}$ between the first characteristic peak and the second characteristic peak, a particle size corresponding to the first minimum value $D_{12}$ ranging from 270 nm to 320 nm, and a number percentage $N_{12}$ corresponding to the first minimum value $D_{12}$ ranging from 3% to 6%; and
   optionally, a peak separation index $\gamma$ of the cathode active material ranges from 5% to 40%, wherein:

   $$\gamma = (N_2 - N_{12})/N_2 \times 100\%,$$

   where:

   $N_{12}$ is a number percentage corresponding to the first minimum value $D_{12}$ between the first characteristic peak and the second characteristic peak; and
   $N_2$ is a number percentage corresponding to the peak position $D_2$ of the second characteristic peak.

3. The cathode active material according to claim 1 or 2, wherein the number-based particle size distribution curve of the primary particles exhibits a second minimum value $D_{23}$ between the second characteristic peak and the third characteristic peak, a particle size corresponding to the second minimum value $D_{23}$ ranging from 400 nm to 500 nm, and a number percentage $N_{23}$ corresponding to the second minimum value $D_{23}$ ranging from 0.0% to 0.5%.

4. The cathode active material according to any one of claims 1 to 3, wherein:

   $D_{50}$ of the primary particles ranges from 0.1 $\mu$m to 1.0 $\mu$m;
   optionally, $D_{50}$ of the secondary particles ranges from 0.7 $\mu$m to 2.0 $\mu$m;
   optionally, a compaction density of the cathode active material ranges from 2.45 g/cm$^3$ to 2.65 g/cm$^3$; and
   optionally, a specific surface area of the cathode active material ranges from 10 m$^2$/g to 13 m$^2$/g.

5. The cathode active material according to any one of claims 1 to 4, comprising:

   a matrix; and
   a carbon coating layer coated on a surface of the matrix, wherein the matrix has a composition represented by formula I:

   $$Li_{1+a}Fe_bM_c(PO_4)_d \qquad \text{Formula I,}$$

   wherein:

   $$-0.1 \leq a \leq 0.1,\ 0 \leq b \leq 1,\ 0 \leq c \leq 0.5,\ 0 \leq d \leq 1;$$

   M is selected from at least one of La, Ce, Cr, Mo, Ca, Hf, Ti, Fe, Zn, Y, Zr, W, Nb, Sm, Sb, Co, Ni, V, Mg, Na, B, or Al;

and

preferably, M comprises Nb and at least one of Al, Nb, W, Co, V, or Ti.

6.  A preparation method for the cathode active material according to any one of claims 1 to 5, the preparation method comprising:

    preparing a first mixed solution containing first iron phosphate, a first lithium source, a first carbon source, and a first M source, grinding the first mixed solution to obtain a first slurry, and performing a first spray drying treatment on the first slurry to obtain a first precursor;

    preparing a second mixed solution containing second iron phosphate, a second lithium source, a second carbon source, and a second M source, grinding the second mixed solution to obtain a second slurry, and performing a second spray drying treatment on the second slurry to obtain a second precursor; and

    mixing the first precursor and the second precursor and sintering the mixture to obtain the cathode active material, wherein $D_{50}$ of the first slurry is smaller than $D_{50}$ of the second slurry.

7.  The preparation method according to claim 6, wherein:

    a difference between the $D_{50}$ of the first slurry and the $D_{50}$ of the second slurry is greater than 0.2 $\mu$m;

    optionally, a particle size of the first iron phosphate ranges from 80 nm to 200 nm, and a particle size of the second iron phosphate ranges from 50 nm to 160 nm; and

    optionally, a particle size $D_{50}$ of the first precursor is smaller than a particle size $D_{50}$ of the second precursor.

8.  The preparation method according to claim 6, wherein:

    the $D_{50}$ of the first slurry ranges from 0.25 $\mu$m to 0.45 $\mu$m; and

    optionally, the $D_{50}$ of the second slurry ranges from 0.45 $\mu$m to 0.80 $\mu$m.

9.  The preparation method according to claim 6, wherein:

    atomizer rotational speeds for the first spray drying treatment and the second spray drying treatment independently range from 30 Hz to 50 Hz;

    optionally, the first precursor and the second precursor have each a particle size $D_{50}$ independently ranging from 15 $\mu$m to 45 $\mu$m, and a water content of $\leq$ 3.0%;

    optionally, the first precursor and the second precursor are mixed in a mass ratio of (3:7) to (7:3); and

    optionally, said sintering is performed at a temperature ranging from 750°C to 850°C for a duration ranging from 6 h to 12 h.

10. A cathode plate, comprising:

    the cathode active material according to any one of claims 1 to 5; or

    the cathode active material prepared by the preparation method according to any one of claims 6 to 9.

11. A battery, comprising the cathode plate according to claim 10.

12. An electrical device, comprising the battery according to claim 11.

FIG. 1

FIG. 2

FIG. 3

FIG. 4

## INTERNATIONAL SEARCH REPORT

| International application No. |
| --- |
| **PCT/CN2024/142852** |

### A. CLASSIFICATION OF SUBJECT MATTER

H01M4/58(2010.01)i

According to International Patent Classification (IPC) or to both national classification and IPC

### B. FIELDS SEARCHED

Minimum documentation searched (classification system followed by classification symbols)

IPC: H01M4/-

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, JPTXT, KRTXT, USTXT, WOTXT, CNKI, web of science: 百分比, 百分率, 百分数, 北京当升材料科技股份有限公司, 比例, 比率, 陈彦彬, 第三, 多, 多峰, 多个, 多组, 分布, 峰, 峰三, 复配, 付海宽, 个数, 函数, 侯晓峰, 胡应立, 级配, 计数, 粒度, 粒径, 磷酸铁锂, 刘亚飞, 配合, 曲线, 三, 三峰, 三个, 三组, 数量, 数目, 占比, 张学全, 至少, 总数, electrode, anode, LiFePO4, Particle, three, third, peak, positive, rate, size, "%",

### C. DOCUMENTS CONSIDERED TO BE RELEVANT

| Category* | Citation of document, with indication, where appropriate, of the relevant passages | Relevant to claim No. |
| --- | --- | --- |
| A | CN 114068921 A (BYD CO., LTD.) 18 February 2022 (2022-02-18) description, paragraphs 0006-0035, and figure 1 | 1-12 |
| A | CN 117810423 A (SHANGHAI LIANGFU NEW ENERGY TECHNOLOGY CO., LTD.) 02 April 2024 (2024-04-02) description, paragraphs 0008-0085, and figures 1-3 | 1-12 |
| A | JP 2020187881 A (RICOH CO., LTD.) 19 November 2020 (2020-11-19) entire document | 1-12 |
| A | CN 117865093 A (HUNAN YACHENG NEW ENERGY CO., LTD.) 12 April 2024 (2024-04-12) entire document | 1-12 |
| A | CN 118851283 A (CONTEMPORARY AMPEREX TECHNOLOGY CO., LTD.) 29 October 2024 (2024-10-29) entire document | 1-12 |

☑ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 August 2025** | **22 August 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/142852**

| C. | DOCUMENTS CONSIDERED TO BE RELEVANT | |
|---|---|---|
| Category* | Citation of document, with indication, where appropriate, of the relevant passages | Relevant to claim No. |
| A | US 2022037649 A1 (SAMSUNG ELECTRONICS CO., LTD. et al.) 03 February 2022 (2022-02-03)<br>entire document | 1-12 |
| A | US 2015158728 A1 (CLARIANT CANADA INC.) 11 June 2015 (2015-06-11)<br>entire document | 1-12 |
| A | JP 2013114847 A (PANASONIC CORP.) 10 June 2013 (2013-06-10)<br>entire document | 1-12 |

Form PCT/ISA/210 (second sheet) (July 2022)

**INTERNATIONAL SEARCH REPORT**
Information on patent family members

| International application No. |
| --- |
| **PCT/CN2024/142852** |

| Patent document cited in search report | | | Publication date (day/month/year) | Patent family member(s) | | | Publication date (day/month/year) |
| --- | --- | --- | --- | --- | --- | --- | --- |
| CN | 114068921 | A | 18 February 2022 | None | | | |
| CN | 117810423 | A | 02 April 2024 | None | | | |
| JP | 2020187881 | A | 19 November 2020 | None | | | |
| CN | 117865093 | A | 12 April 2024 | None | | | |
| CN | 118851283 | A | 29 October 2024 | None | | | |
| US | 2022037649 | A1 | 03 February 2022 | KR | 20220014809 | A | 07 February 2022 |
| US | 2015158728 | A1 | 11 June 2015 | EP | 2458666 | A1 | 30 May 2012 |
| | | | | US | 10329154 | B2 | 25 June 2019 |
| | | | | US | 2010323245 | A1 | 23 December 2010 |
| | | | | EP | 2095451 | A1 | 02 September 2009 |
| | | | | EP | 2095451 | B1 | 07 February 2018 |
| | | | | CA | 2569991 | A1 | 07 June 2008 |
| | | | | WO | 2008067677 | A1 | 12 June 2008 |
| | | | | CN | 105633347 | A | 01 June 2016 |
| | | | | CN | 101636861 | B | 01 July 2015 |
| JP | 2013114847 | A | 10 June 2013 | None | | | |

Form PCT/ISA/210 (patent family annex) (July 2022)

**EP 4 779 719 A1**

**REFERENCES CITED IN THE DESCRIPTION**

**Patent documents cited in the description**

- CN 202411752476